(19) **Europäisches Patentamt / European Patent Office / Office européen des brevets**

(11) **EP 3 855 134 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(51) Int Cl.:
***G01F 1/66*** (2006.01)

(21) Anmeldenummer: **20152982.3**

(22) Anmeldetag: **21.01.2020**

(54) **VORRICHTUNG ZUR MESSUNG DER FLUSSGESCHWINDIGKEIT EINES FLUIDS**

DEVICE FOR MEASURING THE FLOW SPEED OF A FLUID

DISPOSITIF DE MESURE DU DÉBIT D'ÉCOULEMENT D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.07.2021 Patentblatt 2021/30**

(73) Patentinhaber: **SICK Engineering GmbH**
**01458 Ottendorf-Okrilla (DE)**

(72) Erfinder:
• **Klemm, Markus**
 **01159 Dresden (DE)**
• **Schulz, Christian**
 **01069 Dresden (DE)**
• **Starke, Eric**
 **01796 Pirna (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
**EP-A1- 2 154 491     EP-A1- 3 521 773**
**EP-A1- 3 564 631**

• **LENOIR O ET AL: "STUDY OF LAMB WAVES BASED UPON THE FREQUENCY AND ANGULAR DERIVATIVES OF THE PHASE OF THE REFLECTION COEFFICIENT", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, Bd. 94, Nr. 1, 1. Juli 1993 (1993-07-01), Seiten 330-343, XP000383988, ISSN: 0001-4966, DOI: 10.1121/1.407099**

**Beschreibung**

Die Erfindung betrifft eine Vorrichtung zur Messung der Flussgeschwindigkeit eines Fluids auf Ultraschallbasis.

Für die Bestimmung der Strömungsgeschwindigkeit oder des Durchflusses auf Ultraschallbasis sind unterschiedliche Messprinzipien bekannt. Bei einem Dopplerverfahren wird die je nach Strömungsgeschwindigkeit unterschiedliche Frequenzverschiebung eines innerhalb des strömenden Fluid reflektierten Ultraschallsignals ausgewertet. Bei einem Differenzlaufzeitverfahren wird ein Paar Ultraschallwandler am Außenumfang der Rohrleitung mit einem gegenseitigen Versatz in Längsrichtung montiert, die quer zu der Strömung entlang des zwischen den Ultraschallwandlern aufgespannten Messpfades wechselseitig Ultraschallsignale aussenden und registrieren. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt an mehr als einem Punkt zu erfassen. Für eine hohe Messgenauigkeit bei unsymmetrischen Geschwindigkeitsverteilungen über dem Strömungsquerschnitt, sind mehrere Messpfade erforderlich, die nicht durch die Rohrachse verlaufen, so genannte nicht-diametrale Messpfade bzw. Sekantenpfade. Insbesondere sind für eine hohe Unempfindlichkeit der Volumenstrommessung gegenüber inhomogenen Strömungsverteilungen weit außermittige Sekantenpfade wünschenswert.

Bevor weiter auf bekannte Techniken und dann auf die Erfindung eingegangen wird, ist es hilfreich die geometrischen Verhältnisse und insbesondere die Bezeichnung der Winkel im Fall von Sekantenpfaden klar zu beschreiben. Dies erfolgt anhand der Fig. 1 bis 3, von denen die Fig. 1 und 2 Projektionen in bestimmten Schnittebenen darstellen und die Fig. 3 eine 3D-Darstellung ist. In den Projektionen lassen sich die Winkel nicht eindeutig zeigen. Zusammen mit der 3D-Skizze in Fig. 3 ist es aber eindeutig. In den Figuren ist stark schematisch eine Rohrleitung 14 mit einem ersten Ultraschallwandler 20 und einem zweiten Ultraschallwandler 22 dargestellt, die einen Sekantenpfad 21 definieren. Die Längsachse der Rohrleitung liegt in z und y definiert die Höhe und x die Breite. Dann ist

$\alpha$ der Pfadwinkel,
$\gamma$ der Abstrahlwinkel,
$\beta$ der Sekantenwinkel,

des Sekantenpfads 21.

Die zur Erzeugung des Ultraschalls eingesetzten Ultraschallwandler weisen einen Schwingkörper auf, häufig eine Keramik. Mit dessen Hilfe wird beispielsweise auf Basis des piezoelektrischen Effekts ein elektrisches Signal in Ultraschall gewandelt und umgekehrt. Je nach Anwendung arbeitet der Ultraschallwandler als Schallquelle, Schalldetektor oder beides. Dabei muss für eine Kopplung zwischen dem Fluid und dem Ultraschallwandler gesorgt werden. Eine verbreitete Lösung besteht darin, die Ultraschallwandler mit direktem Kontakt zum Fluid in die Leitung hineinragen zu lassen. Solche intrusiven Sonden können genaue Messungen durch Störung der Strömung erschweren. Umgekehrt sind die eintauchenden Ultraschallwandler dem Fluid und dessen Druck und Temperatur ausgesetzt und werden dadurch womöglich beschädigt oder verlieren durch Ablagerungen ihre Funktion.

Grundsätzlich sind auch Techniken bekannt, bei denen die Innenwand vollständig geschlossen bleibt. Ein Beispiel ist die sogenannte Clamp-On-Montage etwa gemäß US 4 467 659, mit der Ultraschallwandler von außen an der Leitung befestigt werden. Damit können aber nur diametrale Messpfade durch die Rohrachse realisiert werden, wodurch bei nicht axialsymmetrischen Strömungsprofilen zusätzliche Fehler erzeugt werden.

Eine weitere Ausführung ist in DE 10 2013 101 950 A1 vorgestellt, bei der die Ultraschalleinheiten selbst jeweils aus Gruppen von mehreren Einzelwandlern bestehen. Diese können bei mehrschichtigen Rohrwänden z.B. aus Faserverbundwerkstoffen direkt in die Rohrwandung integriert werden. Das Funktionsprinzip nutzt die Wandlergruppen, um, wie bei klassischen Clamp-On Anordnungen, durch Körperschallwellen gezielt Ultraschall abzustrahlen bzw. zu empfangen. Das hat, wie von sogenannten Clamp-On Konstruktionen bekannt, bei denen die Ultraschallwandler außen auf die Kanalwand montiert sind, den Vorteil, dass die Wandlereinheit nicht in den Strömungskanal hineinragt und somit die Strömung nicht gestört wird und keine Verschmutzungen auftreten können. Ein Nachteil ist, dass die Herstellung solcher Messvorrichtungen mit integrierten Wandlern sehr aufwändig und kostenintensiv ist. Für eine Integration in die Kanalwand muss die Kanalwand speziell, beispielsweise mehrschichtig, hergestellt werden und kann auch nicht aus handelsüblichen Werkstoffen, wie Stahl, bestehen. Solche Messvorrichtungen können somit nicht derart präzise hergestellt werden wie jene aus Stahl. Präzision ist jedoch eine Voraussetzung bei diesen Messvorrichtungen, die höchst präzise Messergebnisse liefern müssen, da in vielen Anwendungen sehr große Mengen Fluid (z.B. Erdgas) durch die Messvorrichtung strömen und deshalb bereits geringfügig ungenaue Messergebnisse in der Endabrechnung sehr hohe Wertschwankungen bedeuten können.

In WO 2015 096 901 A1 ein System in Clamp-On-Montage vorgeschlagen, dass auch Sekantenpfade nutzen kann, wobei die Lage durch das verwendete Rohrmaterial und das zu messende Fluid begrenzt ist. Durch den Übergang von der Kanalwandung ins Fluid erfolgt eine Abstrahlung in einem festen Winkel $\gamma$ welcher durch das Verhältnis von Phasengeschwindigkeit $c_P$ der in sich entlang der Kanalwand ausbreitenden Körperschallwellen und Schallgeschwindigkeit im Fluid $c_F$ bestimmt wird.

$$\sin(\gamma) = \frac{c_F}{c_P} \tag{1}$$

Nach dem Zusammenhang

$$\tan^2 \gamma = \tan^2 \beta + \cot^2 \alpha \tag{2}$$

teilt sich der Winkel $\gamma$ auf den für den Messeffekt verantwortlichen Pfadwinkel $\alpha$ (möglichst kleiner 45°) und den für die Strömungsprofilsensitivität verantwortlichen Sekantenwinkel $\beta$ (möglichst größer 20°) auf. Dadurch sind die Winkel $\alpha$ und $\beta$ für die Strömungsmessung nicht unabhängig voneinander optimierbar. Insbesondere für den praktisch relevanten Fall metallischer Rohre und flüssiger Medien mit mit typischen Schallgeschwindigkeiten von $c_F$ = [1200... 1800] m/s ist die erreichbare Genauigkeit der Volumenstrommessung bei gestörten Strömungsprofilen begrenzt.

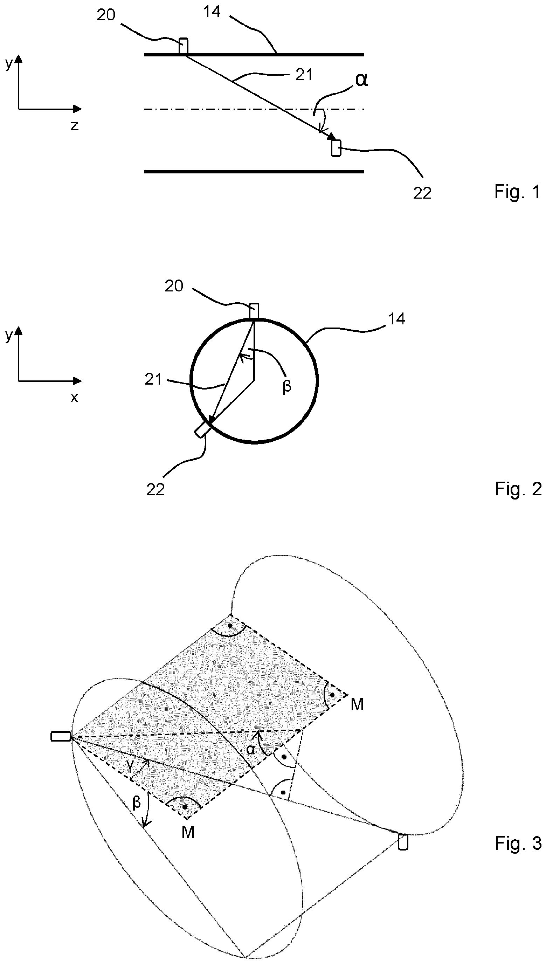

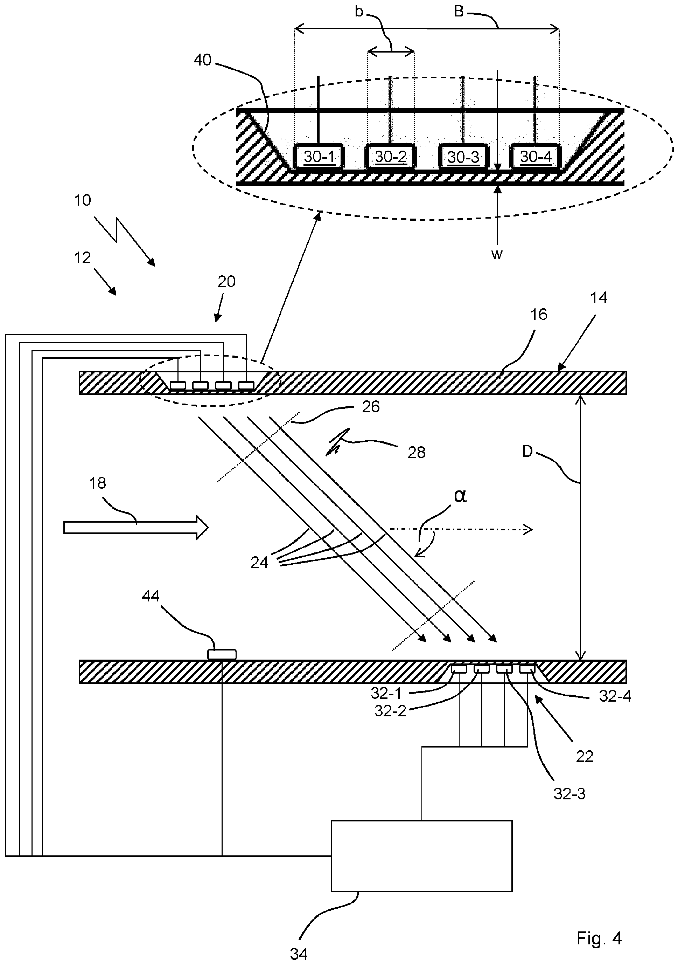

Ein weiterer Nachteil bei bekannten intrusiven Sonden tritt bei hohen Strömungsgeschwindigkeiten auf. Dieser ist anschaulich in EP 2 103 912 A1 in Figuren 3 und 4 dargestellt. Durch den Verwehungseffekt trifft das Ultraschallpaket je nach Flussgeschwindigkeit auf unterschiedliche Stellen auf der gegenüberliegenden Rohrwand und trifft womöglich nicht mehr auf die dort angeordnete Ultraschallwandlereinheit

Aus Kang et al "Two-dimensional flexural ultrasonic phased array for flow measurement" in 2017 IEEE International Ultrasonics Symposium (IUS), Washington, DC, USA, 6-9 Sep 2017. Published in: 2017 IEEE International: Ultrasonics Symposium (IUS) ISSN 1948-5727, ist bekannt, dem oben genannten Verwehungseffekt durch sogenanntes "phased array beam steering" zu begegnen. Ein "phased array" besteht aus einzelnen Ultraschallwandlern, die zusammen in Überlagerung Ultraschallsignale abgeben, deren Abstrahlrichtung durch Änderung der einzelnen Phasen der einzelnen Ultraschallwandler änderbar ist. Diese "phased array" Ultraschallwandlereinheiten werden in Öffnungen eines Strömungskanals eingesetzt und haben daher den Nachteil von in die Rohrwand eingesetzten Ultraschallwandlern, nämlich Störung der Strömung, selbst wenn solche Wandler nur wenig in Strömung hineinragen. Weiter ist eine Verschmutzungsproblematik, insbesondere im unvermeidbaren Spalt zwischen Ultraschallwandlereinheit und Rohrwand, nicht zu vermeiden.

Alle Lösungen aus dem Stand der Technik mit geschlossener Rohrwand haben den Nachteil, dass sehr außermittige Sekantenpfade, also solche mit kleinem Pfadwinkel ($\alpha$) und großem Sekantenwinkel ($\beta$), nicht möglich sind.

Aus der EP 3 564 631 A1 ist ein Clamp-on Gerät bekannt, bei dem zwei einzelne Ultraschallwandler Lamb-Wellen bestimmter Schwingungsmoden anregen und diese Lamb-Wellen Schallwellen im Fluid anregen. Die Schallwellen werden analog zur Erzeugung von zwei anderen, einzelnen Ultraschallwandlern empfangen.

In der Veröffentlichung LENOIR 0 ET AL: "STUDY OF LAMB WAVES BASED UPON THE FREQUENCY AND ANGULAR DERIVATIVES OF THE PHASE OF THE REFLECTION COEFFICIENT", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, Bd. 94, Nr. 1, 1. Juli 1993 (1993-07-01), Seiten 330-343, XP000383988, ISSN: 0001-4966, DOI: 10.1121/1.407099 ist eine Untersuchung von Lamb Wellen und deren Verhalten beschrieben. Dabei wurden die Wellen mit einer ebenen Welle unter einem Einfallswinkel $\Theta$ angeregt.

Ausgehend von diesem Stand der Technik ist es Aufgabe der Erfindung eine verbesserte Vorrichtung zur Messung der Flussgeschwindigkeit eines Fluids bereitzustellen, mit der insbesondere die vorgenannten Nachteile vermieden werden können, also ein hohe Messgenauigkeit mit guter Signalqualität zu liefern.

Diese Aufgabe wird gelöst durch eine Vorrichtung mit den Merkmalen des Anspruchs 1.

Die erfindungsgemäße Vorrichtung umfasst

- einen Messaufnehmer mit einer Rohrleitung für das Fluid mit einer Rohrwand,
- wenigstens zwei Ultraschallwandlereinheiten, die jeweils aus einem Array aus einzelnen Ultraschallwandlern bestehen und in der Rohrleitung zwischen sich einen Messpfad definieren,
- eine Steuer- und Auswerteeinheit zur Ansteuerung der Ultraschallwandlereinheiten zum Aussenden von Ultraschallsignalen und zur Auswertung von empfangenen Utraschallsignalen und Bestimmung der Flussgeschwindigkeit,
- die Steuer- und Auswerteeinheit ist ausgebildet, die einzelnen Ultraschallwandler mit unterschiedlicher Phase anzusteuern, so dass die Ultraschallwandlereinheiten jeweils als phased-array ausgebildet sind.

Erfindungsgemäß kontaktieren die Ultraschallwandlereinheiten außenseitig die Rohrwand, wobei die Rohrwand im Bereich der Kontaktierung mit einer Wandstärke ausgebildet ist, die kleiner ist als die Hälfte der Wellenlänge der Transversalwelle des Ultraschalls in der Rohrwand. Erfindungsgemäß ist zudem der Messpfad als Sekantenpfad ausgebildet verläuft nicht diametral.

Ein erster Vorteil besteht darin, dass die Rohrwand zumindest innenseitig unberührt bleibt und daher weder die Strömung beeinträchtigt ist, das Strömungsprofil also ungestört bleibt, noch Verschmutzungen sich ablagern können. Es können keinerlei Probleme mit korrosiven, ätzenden oder anderweitig aggressiven Medien auftreten. Die erfindungsgemäße Vorrichtung ist daher für alle Fluide geeignet. Dennoch sind die Ultraschallwandler nicht wie in DE 10 2013 101 950 A1 aufwändig in die Wand integriert, sondern kontaktieren diese einfach von außen.

Der besondere Vorteil der Erfindung liegt aber darin, dass es die erfindungsgemäß dimensionierte Wandstärke erlaubt, besonders große Sekantenwinkel und/oder kleine Pfadwinkel zu erreichen. Dadurch können sehr außermittig gelegene Sekantenpfade realisiert werden, die wie eingangs beschrieben eine größere Messgenauigkeit erlauben.

Die Erfindung bietet den weiteren Vorteil, dass ein und dieselbe Vorrichtung für eine große Vielzahl verschiedenster Fluide unter verschiedensten Bedingungen geeignet ist. Jedes Fluid hat seine individuelle Schallgeschwindigkeit, die auch von den Umgebungsbedingungen, wie z.B. Temperatur und Druck, abhängt. Eine bestimmte Ansteuerung der einzelnen Wandler führt für eine bestimmte Schallgeschwindigkeit zu einer bestimmten Abstrahlcharakteristik. Über die Ansteuerung der Phasen kann nun aber die Richtcharakteristik der Ultraschallwandler in Abhängigkeit der Schallgeschwindigkeit angepasst werden. Damit können die Ultrasschallsignale eines Wandlers sehr viel gezielter unter sich ändernden Umweltbedingungen auf den anderen Wandler gerichtet werden. Insgesamt ist die erfindungsgemäße Vorrichtung universeller einsetzbar und liefert gleichzeitig verbesserte Messergebnisse.

In einer bevorzugten Ausgestaltung ist die Wandstärke im Bereich der Kontaktierung kleiner als ein Viertel der Wellenlänge der Transversalwelle des Ultraschalls in der Rohrwand. Dadurch kann der Abstrahlwinkel und damit die Messgenauigkeit weiter erhöht werden.

Diesen Vorteil erreicht man ebenso dadurch, dass die Abmessungen der einzelnen Ultraschallwandler parallel zur Rohrwand kleiner sind als die Ultraschallwellenlänge im Fluid und bevorzugt kleiner als das 0,6-fache der Ultraschallwellenlänge.

In Weiterbildung der Erfindung sind die Abmessungen der Ultraschallwandlereinheiten parallel zur Rohrwand größer als das Doppelte der Ultraschallwellenlänge im Fluid, um ein ausreichend großes Ultraschallpaket, also eine ausreichende Intensität, aussenden zu können. Ausreichend heißt, dass die jeweils gegenüberliegende Ultraschallwandlereinheit das Ultraschallpaket mit zum Empfang und zur Auswertung ausreichend großer Intensität empfängt.

In Weiterbildung der Erfindung weist wenigstens einer der Messpfade einen Sekantenwinkel von größer 20°, vorzugsweise größer 30° auf. Damit lassen sich Messpfade möglichst nahe an die Rohrwandung legen, was im Ergebnis zu einer höheren Vorstörungsfestigkeit und damit genaueren Messwerten führt.

Bevorzugt ist in einer Ausgestaltung der Erfindung das Array ein lineares Array, bestehend aus einer Zeile, deren Ausrichtung parallel zum Messpfad ist.

In Weiterbildung der Erfindung kann das Array auch zweidimensional ausgebildet sein, wobei die einzelnen Ultraschallwandler vorzugsweise in Reihen und Spalten angeordnet sind. Das ermöglicht dem Verwehungseffekt über die Ansteuerung der Ultraschallwandler bezüglich ihrer Phase und damit entsprechendes Nachführen des Abstrahlwinkels, zu begegnen. So können bessere Messergebnisse über einen großen Flussgeschwindigkeitsbereich erfasst werden. Die phased-array Ultraschallwandlereinheit kann dann den Verweheffekt online berücksichtigen und die Richtung der Abstrahlung der Ultraschallpakete der Flussgeschwindigkeit anpassen.

In konstruktiv einfacher Weise ist der Bereich der Kontaktierung mit der erfindungsgemäß verdünnten Rohrwand vorzugsweise durch eine Ausnehmung im Äußeren der Rohrwand geformt, wobei die Ausnehmung in ihren Abmessungen dem Array angepasst ist. Dadurch kann der verdünnte Wandbereich möglichst klein gehalten bleiben, damit die mechanische Stabilität der Rohrleitung durch die Verdünnung möglichst wenig beeinträchtigt ist.

Um die störende Übertragung durch Körperschall, der über die Rohrwand übertragen werden kann, möglichst zu verhindern, sind die Ultraschallwandler in Weiterbildung mit einem Körperschallfilter gekoppelt.

In Weiterbildung der Erfindung sind die am Rand des Arrays liegenden Ultraschallwandler derart ansteuerbar, dass dadurch eine aktive Körperschallunterdrückung erfolgt. Dadurch kann Ultraschall am Rand des Arrays durch Interferenz ausgelöscht werden, so dass der Rand des Arrays nicht abstrahlt und damit auch nicht in die Rohrwandung koppeln kann. Dadurch ist ein Körperschall bereits am Entstehungsort verhindert bzw. zumindest reduziert.

Bevorzugt sind in konstruktiv einfacher Weise die Ultraschallwandler im verdünnten Bereich an die Rohrwand geklebt oder angepresst.

Im Folgenden wird die Erfindung anhand eines Ausführungsbeispiels unter Bezugnahme auf die Zeichnung im Einzelnen erläutert. In der Zeichnung zeigen:

Fig. 1 bis 3    schematische Darstellung mit Messpfad in einer Rohrleitung zur Verdeutlichung der einzelnen Winkeldefinitionen;

Fig. 4        eine schematische Darstellung einer erfindungsgemäßen Vorrichtung.

Eine erfindungsgemäße Vorrichtung 10 umfasst einen Messaufnehmer 12, der eine Rohrleitung 14 für das Fluid mit einer Rohrwand 16 aufweist. Das durch die Rohrleitung 14 strömende Fluid, ein Gas oder eine Flüssigkeit, ist in Fig. 4 mit einem breiten Pfeil 18 dargestellt.

Weiter weist die Vorrichtung 10 wenigstens zwei Ultraschallwandlereinheiten 20 und 22 auf, die zwischen sich in der Rohrleitung 14 einen Messpfad 24 definieren, der in der Fig. 4 durch Pfeile 24 angedeutet ist. Der Messpfad 24 ist in Fig. 4 zur einfacheren Darstellung schematisch als diametraler Pfad dargestellt. Er ist aber erfindungsgemäß als Sekantenpfad ausgebildet, der nicht diametral verläuft. Sekantenpfade sind das eigentliche Ziel der Erfindung. Wie aus dem Stand der Technik bekannt und eingangs beschrieben, sind die Ultraschallwandlereinheiten 20 und 22 in Strömungsrichtung 18 verschoben angeordnet. Dadurch liegt der Messpfad 24 nicht orthogonal zur Strömungsrichtung 18. Jede der Ultraschallwandlereinheiten 20 und 22 kann als Sender oder Empfänger arbeiten.

Aus dem Pfadwinkel $\alpha$ und dem Abstand D zur gegenüberliegenden Kanalwand, bei einem runden Rohr 14 und diametralem Messpfad wäre das der Rohrdurchmesser, ergibt sich die Länge L des Messpfades 24 im fluiden Medium. Ultraschallsignale 28, die auf dem Messpfad 24 in entgegengesetzte Richtungen ausgesandt und empfangen werden, haben also einmal eine Komponente in Richtung der Strömungsrichtung 18 und ein anders Mal entgegen der Strömungsrichtung 18. Die Ultraschallsignale 28 werden gepulst als Ultraschallwellenpakete 28 ausgesandt, um die Strömungsgeschwindigkeit v des Fluids 18 wie im Stand der Technik nach dem Laufzeitverfahren durch die Beziehung

$$v = \frac{t_2 - t_1}{2 * t_2 * t_1} * \frac{L}{\cos(\alpha)} \qquad (3)$$

zu berechnen, worin $t_2$ und $t_1$ die Schalllaufzeiten bezeichnen, die von den abgestrahlten Ultraschallwellenpaketen 28 benötigt werden, um den Messpfad 24 stromauf- bzw. stromabwärts zurückzulegen.

Eine Ultraschallwandlereinheit 20 bzw. 22 besteht aus jeweils einer Gruppe (Array) von einzelnen Ultraschallwandlern 30-x bzw. 32-x. Das "x" in der Bezugsziffer steht für einen laufenden Index für jeden einzelnen Wandler. In der Zeichnung sind exemplarisch jeweils nur vier Ultraschallwandler 30-1 bis 30-4 bzw. 32-1 bis 32-4 in jeweils einer Reihe dargestellt.

Die einzelnen Ultraschallwandler 30-x bzw. 32-x werden zum Ausstrahlen von Ultraschall von einer Steuer- und Auswerteeinheit 34 so angesteuert, dass sie innerhalb ihrer Reihe einen Phasenversatz aufweisen, wobei der Phasenversatz so gewählt ist, dass die Überlagerung der daraus resultierenden Ultraschallwellen zu dem Ultraschallwellenpaket 28 mit der Wellenfront 26 mit dem Pfadwinkel $\alpha$ führt. Die Ultraschallwandler 30-x bzw. 32-x einer Ultraschallwandlereinheit 20 bzw. 22 sind somit als phased-array aufgebaut.

Damit die Ultraschallwandler 30-x bzw. 32-x überhaupt durch die Rohrwand 16 Ultraschall in der beschriebenen Weise abstrahlen, kontaktieren die Ultraschallwandler 30-x bzw. 32-x die Rohrwand 16 außenseitig. Im Unterschied zu bekannten Clamp-on Systemen ist aber jetzt die Rohrwand 16 im Bereich der Kontaktierung mit einer Wandstärke w ausgebildet, die kleiner ist als die Hälfte, vorzugsweise kleiner als ein Viertel, der Wellenlänge $\lambda_{Rohr}$ der Transversalwelle des Ultraschalls in der Rohrwand 16. Bei einer typischen Rohrwand aus Stahl mit typischer Schallgeschwindigkeit der Transversalwelle von $c_{L,Rohr}$ = 3100 m/s wäre die Wandstärke w bei einer typischen Ultraschallfrequenz von f = 1 MHz etwa 0,78 mm, entsprechend einem Viertel der Wellenlänge.

Die Ansteuerung der einzelnen Ultraschallwandler 30-x und 32-x erfolgt durch die Steuer- und Auswerteeinheit 34. Das gilt sowohl für das Aussenden von Ultraschall mit der Einzelansteuerung mit entsprechender Phase als auch für den Empfang mit der Auswertung des eintreffenden Ultraschallpakets 28 an jedem Wandler. Insbesondere wird in der Auswerteeinheit 34 die Laufzeit t der Ultraschallwellenpakete 28, die in die eine oder die entgegengesetzte Richtung entlang des Messpfades 24 gesendet werden, bestimmt. Aus den Laufzeiten $t_1$ und $t_2$ von hin- und rücklaufendem Ultraschallwellenpaket 28 wird die Flussgeschwindigkeit v nach Gleichung (3) errechnet.

Durch die erfindungsgemäße Ausgestaltung der Ultraschallwandlereinheiten 20 bzw. 22 als phased-array hängt der Abstrahlwinkel $\gamma$ von der von der eingestellten Phasenverschiebung der einzelnen Signale und von der Schallgeschwindigkeit im Fluid ab. Die Schallgeschwindigkeit selbst ist abhängig von Umgebungsbedingungen wie Temperatur und Druck. Deshalb ist es vorteilhaft, dass über die Ansteuerung der einzelnen Ultraschallwandler 30-x bzw. 32-x mittels der Steuer- und Auswerteeinheit 34 die Phasendifferenz in Abhängigkeit der Umgebungsbedingungen so angepasst werden kann, dass der Abstrahlwinkel $\gamma$ gleichbleibt, auch wenn die Schallgeschwindigkeit sich ändert. Zur Bestimmung der Umgebungsbedingungen kann eine Umgebungserfassungseinheit 44 vorgesehen sein, die z.B. Temperatur und/oder Druck in der Rohrleitung 14 erfasst und an die Steuer- und Auswerteeinheit 34 weiterleitet, um die Fluideigenschaften zu überwachen und damit die Schallgeschwindigkeit und Dichte berechnen zu können. Mit diesen Kenntnissen können die Ultraschallwandler 30-x bzw. 32-x besser angesteuert bzw. ausgewertet werden. Die Dichte ist notwendig, um den Massenfluss zu berechnen und kann aus den Eigenschaften des Mediums, sowie Temperatur und Druck berechnet werden.

Damit ist die erfindungsgemäße Vorrichtung 10 für einen großen Schallgeschwindigkeitsbereich einsetzbar.

In einer Ausführungsform der Erfindung sind die Abmessungen b der einzelnen Ultraschallwandler 30-x bzw. 32-x parallel zur Rohrwand 16 kleiner als die Ultraschallwellenlänge $\lambda_{fluid}$ im Fluid und bevorzugt kleiner als das 0,6-fache der Ultraschallwellenlänge $\lambda_{fluid}$.

Vorteilhafterweise sind die Abmessungen B der Ultraschallwandlereinheiten 20 bzw. 22 parallel zur Rohrwand 16 größer als das Doppelte der Ultraschallwellenlänge $\lambda_{fluid}$ im Fluid.

Der Bereich der Kontaktierung, also der Bereich verdünnter Wandstärke, ist wie in Fig. 4 dargestellt durch eine Ausnehmung 40 gebildet, die von außen in die Rohrwand 16 eingebracht ist. Die Form der Ausnehmung ist sinnvollerweise in ihren Abmessungen dem Array angepasst ist.

In der in Fig. 4 dargestellten Ausführungsform bestehen die als Array ausgebildeten Ultraschallwandlereinheiten 20 bzw. 22 aus einer Zeile von nur je vier Ultraschallwandlern 30-x bzw. 32-x. Diese Beschränkung ist im Wesentlichen dadurch bedingt, dass die Zeichnung einfach und übersichtlich bleiben soll. Wenn vier solcher einzelner Ultraschallwandler zu wenig Signal liefern kann das Array auch mehr, beispielsweise acht, Ultraschallwandler aufweisen. Bevorzugt ist deshalb das Array in nicht dargestellter Weise mit mehr Ultraschallwandlern ausgebildet. Die Anzahl an Ultraschallwandlern ist ein Kompromiss zwischen Signalstärke, Komplexität und Kosten.

Wenn das Array ein zweidimensionales Array mit Anordnung der Ultraschallwandler 30-x bzw. 32-x in Reihen und Spalten, dann kann über die Ansteuerung der einzelnen Ultraschallwandler 30-x bzw. 32-x mittels der Steuer- und Auswerteeinheit 34 der Abstrahlwinkel $\gamma$ verändert werden. Dadurch kann einem Verwehungseffekt, insbesondere bei hohen Flussgeschwindigkeiten, entgegengewirkt werden. Der Abstrahlwinkel $\gamma$ kann nämlich so nachgeregelt werden, dass unabhängig von der Flussgeschwindigkeit stets die gegenüberliegende Ultraschallwandlereinheit 20 bzw. 22 vom ausgesandten Wellenpaket 28 "getroffen" wird.

In nicht dargestellter Weise sind die Ultraschallwandler 30-x bzw. 32-x einer Ultraschallwandlereinheit 20 bzw. 22 mit einem Körperschallfilter gekoppelt, wobei die Kopplung z.B. über Klebstoff oder Anpressen erfolgen kann.

In einer Weiterbildung der Erfindung ist die Steuer- und Auswerteeinheit 34 dazu ausgebildet, die am Rand des Arrays liegenden Ultraschallwandler (in Fig. 4 wären das 30-1 und 30-4 bzw. 32-1 und 32-4) derart anzusteuern, dass eine aktive Körperschallunterdrückung erfolgt, dass also laterale Schwingungskomponenten durch Interferenz mit dem vom Rand erzeugten Ultraschall eliminiert werden, so dass der Rand des Arrays möglichst keine Schwingungen lateral in die Rohrwand überträgt. So kann eine Einkopplung von Ultraschall in die Rohrwandung 16 zumindest reduziert, wenn nicht gar verhindert werden.

Die obige Beschreibung ist der Einfachheit halber anhand eines diametralen Messpfads 24 erfolgt, weil die konstruktiven Details unabhängig davon sind, ob es sich um einen diametralen oder einen Sekantenpfad handelt. Es sei aber noch mal wiederholt, dass das Ziel der Erfindung es ist, Sekantenpfade 21 und insbesondere sehr außermittig gelegene Sekantenpfade zu erreichen, was eben nur in der erfindungsgemäßen Ausführung möglich ist. Vorzugsweise ist die Ansteuerung der Ultraschallwandler 30-x bzw. 32-x derart, dass wenigstens einer der Messpfade einen Sekantenwinkel von größer 20°, vorzugsweise größer 30° aufweist. Wie eingangs ausgeführt führen Sekantenpfade und insbesondere die Berücksichtigung weit außenliegenden Sekantenpfaden zu höherer Vorstörungsfestigkeit des Ergebnisses und damit zu genaueren Messwerten.

**Patentansprüche**

1. Vorrichtung zur Messung der Flussgeschwindigkeit eines Fluids (18) mit

   - einem Messaufnehmer (12) der eine Rohrleitung (14) für das Fluid (18) mit einer Rohrwand (16) aufweist,
   - wenigstens zwei Ultraschallwandlereinheiten (20 und 22), die jeweils aus einem Array aus einzelnen Ultraschallwandlern (30-x bzw. 32-x) bestehen und in der Rohrleitung (14) zwischen sich einen Messpfad (24) definieren,
   - einer Steuer- und Auswerteeinheit (34) zur Ansteuerung der Ultraschallwandlereinheiten (20, 22) zum Aussenden von Ultraschallsignalen (28) und zur Auswertung von empfangenen Utraschallsignalen (28) und Bestimmung der Flussgeschwindigkeit (v),
   - und die Steuer- und Auswerteeinheit (34) ausgebildet ist, die einzelnen Ultraschallwandler (30-x, 32-x) mit unterschiedlicher Phase anzusteuern, so dass die Ultraschallwandlereinheiten (20, 22) jeweils als phased-array ausgebildet sind,

   wobei die Ultraschallwandlereinheiten (20, 22) außenseitig die Rohrwand (16) kontaktieren,
   **dadurch gekennzeichnet,**

- **dass** der Messpfad (24) als Sekantenpfad (21) ausgebildet ist und nicht diametral verläuft,
- und **dass** die Rohrwand (16) im Bereich der Kontaktierung mit einer Wandstärke (w) ausgebildet ist, die kleiner ist als die Hälfte der Wellenlänge der Transversalwelle ($\lambda_{Rohr}$) des Ultraschalls in der Rohrwand (16).

2. Vorrichtung nach Anspruch 1, **dadurch gekennzeichnet, dass** die Wandstärke im Bereich der Kontaktierung kleiner als ein Viertel der Wellenlänge der Transversalwelle ($\lambda_{Rohr}$) des Ultraschalls in der Rohrwand ist.

3. Vorrichtung nach einem der vorhergehenden Ansprüche, **dadurch gekennzeichnet, dass** die Abmessungen der Ultraschallwandler parallel zur Rohrwand kleiner sind als die Ultraschallwellenlänge im Fluid.

4. Vorrichtung nach einem der vorhergehenden Ansprüche, **dadurch gekennzeichnet, dass** die Abmessungen der Ultraschallwandlereinheiten parallel zur Rohrwand größer sind als das Doppelte der Ultraschallwellenlänge im Fluid.

5. Vorrichtung nach einem der vorhergehenden Ansprüche, **dadurch gekennzeichnet, dass** wenigstens einer der Messpfade einen Sekantenwinkel von größer 20°, vorzugsweise größer 30° aufweist.

6. Vorrichtung nach einem der vorhergehenden Ansprüche, **dadurch gekennzeichnet, dass** das Array ein lineares Array ist und aus einer Zeile besteht.

7. Vorrichtung nach einem der vorhergehenden Ansprüche, **dadurch gekennzeichnet, dass** das Array zweidimensional ist und die einzelnen Ultraschallwandler vorzugsweise in Reihen und Spalten angeordnet sind.

8. Vorrichtung nach einem der vorhergehenden Ansprüche, **dadurch gekennzeichnet, dass** der Bereich der Kontaktierung durch eine Ausnehmung im Äußeren der Rohrwand geformt ist, wobei die Ausnehmung in ihren Abmessungen dem Array angepasst ist.

9. Vorrichtung nach einem der vorhergehenden Ansprüche, **dadurch gekennzeichnet, dass** das die Ultraschallwandler mit einem Körperschallfilter gekoppelt sind.

10. Vorrichtung nach einem der vorhergehenden Ansprüche, **dadurch gekennzeichnet, dass** die Steuer- und Auswerteinheit so ausgebildet, dass die am Rand des Arrays liegenden Ultraschallwandler derart ansteuerbar sind, dass dadurch eine aktive Körperschallunterdrückung erfolgt.

11. Vorrichtung nach einem der vorhergehenden Ansprüche, **dadurch gekennzeichnet, dass** die Ultraschallwandler an die Rohrwand geklebt oder angepresst sind.

12. Vorrichtung nach einem der vorhergehenden Ansprüche, **dadurch gekennzeichnet, dass** die Steuer- und Auswerteinheit so ausgebildet, dass die Ansteuerung der Ultraschallwandler bezüglich ihrer Phase für jeden Ultraschallwandler abhängig ist von der Schallgeschwindigkeit im Fluid.

**Claims**

1. Device for measuring the flow velocity of a fluid (18) with

   - a sensor (12) comprising a conduit (14) for the fluid (18) with a conduit wall (16),
   - at least two ultrasonic transducer units (20 and 22), each consisting of an array of individual ultrasonic transducers (30-x and 32-x respectively) and defining a measurement path (24) in the conduit (14) between them,
   - a control and evaluation unit (34) for controlling the ultrasonic transducer units (20, 22) for transmitting ultrasonic signals (28) and for evaluating received ultrasonic signals (28) and determining the flow velocity (v),
   - and the control and evaluation unit (34) is designed to drive the individual ultrasonic transducers (30-x, 32-x) with different phase, so that the ultrasonic transducer units (20, 22) are each designed as a phased array, wherein the ultrasonic transducer units (20, 22) contact the conduit wall (16) externally,
   **characterized in that**
   - the measuring path (24) is formed as a secant path (21) and does not lie diametrically,
   - and **in that** the conduit wall (16) is formed in the region of the contacting with a wall thickness (w) which is smaller than half the wavelength of the transverse wave ($\lambda_{conduit}$) of the ultrasound in the conduit wall (16).

**2.** The device of claim 1, **characterized in that** the wall thickness in the region of contact is less than a quarter of the wavelength of the transverse wave ($\lambda_{conduit}$) of the ultrasound in the conduit wall.

**3.** Device according to any one of the preceding claims, **characterized in that** the dimensions of the ultrasonic transducers parallel to the conduit wall are smaller than the ultrasonic wavelength in the fluid.

**4.** Device according to any one of the preceding claims, **characterized in that** the dimensions of the ultrasonic transducer units parallel to the conduit wall are greater than twice the ultrasonic wavelength in the fluid.

**5.** Device according to any one of the preceding claims, **characterized in that** at least one of the measurement paths has a secant angle greater than 20°, preferably greater than 30°.

**6.** The device according to any one of the preceding claims, **characterized in that** the array is a linear array and consists of one row.

**7.** Device according to any one of the preceding claims, **characterized in that** the array is two-dimensional and the individual ultrasonic transducers are preferably arranged in rows and columns.

**8.** Device according to any one of the preceding claims, **characterized in that** the area of contact is formed by a recess in the exterior of the conduit wall, said recess being dimensionally adapted to the array.

**9.** Device according to any one of the preceding claims, **characterized in that** the ultrasonic transducers are coupled to a structure-borne sound filter.

**10.** Device according to one of the preceding claims, **characterized in that** the control and evaluation unit is designed in such a way that the ultrasonic transducers located at the edge of the array can be controlled in such a way that active suppression of structure-borne noise is thereby effected.

**11.** Device according to any one of the preceding claims, **characterized in that** the ultrasonic transducers are glued or pressed to the conduit wall.

**12.** Device according to any one of the preceding claims, **characterized in that** the control and evaluation unit is configured such that the control of the ultrasonic transducers with respect to their phase for each ultrasonic transducer is dependent on the speed of sound in the fluid.

**Revendications**

**1.** Dispositif de mesure de la vitesse d'écoulement d'un fluide (18) avec

- un capteur (12) comprenant un conduit (14) pour le fluide (18) avec une paroi de conduit (16),
- au moins deux unités de transducteurs ultrasoniques (20 et 22), chacune consistant en un réseau de transducteurs ultrasoniques individuels (30-x et 32-x respectivement) et définissant un trajet de mesure (24) dans le conduit (14) entre elles,
- une unité de commande et d'évaluation (34) pour commander les unités de transducteurs ultrasoniques (20, 22) pour émettre des signaux ultrasoniques (28) et pour évaluer les signaux ultrasoniques reçus (28) et déterminer la vitesse d'écoulement (v),
- et l'unité de commande et d'évaluation (34) est conçue pour commander les différents transducteurs ultrasoniques (30-x, 32-x) avec une phase différente, de sorte que les unités de transducteurs ultrasoniques (20, 22) sont chacune conçues comme un réseau en phase,
dans lequel les unités de transducteurs ultrasoniques (20, 22) sont en contact avec la paroi du conduit (16) à l'extérieur,
**caractérisé en ce que**
- le trajet de mesure (24) est formé comme un trajet sécant (21) et n'est pas diamétral,
- et **en ce que** la paroi du conduit (16) est formée dans la région du contact avec une épaisseur de paroi (w) qui est inférieure à la moitié de la longueur d'onde de l'onde transversale ($\lambda_{conduit}$) des ultrasons dans la paroi du conduit (16).

**2.** Dispositif de la revendication 1, **caractérisé en ce que** l'épaisseur de la paroi dans la région de contact est inférieure à un quart de la longueur d'onde de l'onde transversale ($\lambda_{conduit}$) des ultrasons dans la paroi du conduit.

**3.** Dispositif selon l'une des revendications précédentes, **caractérisé en ce que** les dimensions des transducteurs ultrasoniques parallèles à la paroi du conduit sont inférieures à la longueur d'onde ultrasonique dans le fluide.

**4.** Dispositif selon l'une des revendications précédentes, **caractérisé en ce que** les dimensions des unités du transducteur ultrasonique parallèles à la paroi du conduit sont supérieures à deux fois la longueur d'onde ultrasonique dans le fluide.

**5.** Dispositif selon l'une des revendications précédentes, **caractérisé en ce qu'**au moins un des trajets de mesure présente un angle sécant supérieur à 20°, de préférence supérieur à 30°.

**6.** Dispositif selon l'une des revendications précédentes, **caractérisé en ce que** le réseau est un réseau linéaire et est constitué d'une rangée.

**7.** Dispositif selon l'une des revendications précédentes, **caractérisé en ce que** le réseau est bidimensionnel et les transducteurs ultrasoniques individuels sont de préférence disposés en lignes et en colonnes.

**8.** Dispositif selon l'une des revendications précédentes, **caractérisé en ce que** la zone de contact est formée par un évidement à l'extérieur de la paroi du conduit, ledit évidement étant dimensionnellement adapté au réseau.

**9.** Dispositif selon l'une des revendications précédentes, **caractérisé en ce que** les transducteurs ultrasoniques sont couplés à un filtre à bruits de structure.

**10.** Dispositif selon l'une des revendications précédentes, **caractérisé en ce que** l'unité de commande et d'exploitation est conçue de telle sorte que les transducteurs ultrasoniques situés au bord du réseau peuvent être commandés de manière à obtenir une suppression active du bruit de structure.

**11.** Dispositif selon l'une des revendications précédentes, **caractérisé en ce que** les transducteurs ultrasoniques sont collés ou pressés sur la paroi du conduit.

**12.** Dispositif selon l'une des revendications précédentes, **caractérisé en ce que** l'unité de commande et d'exploitation est configurée de telle sorte que la commande des transducteurs ultrasoniques quant à leur phase pour chaque transducteur ultrasoniques dépend de la vitesse du son dans le fluide.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4467659 A
- DE 102013101950 A1
- WO 2015096901 A1
- EP 2103912 A1
- EP 3564631 A1

**In der Beschreibung aufgeführte Nicht-Patentliteratur**

- **KANG et al.** Two-dimensional flexural ultrasonic phased array for flow measurement. *2017 IEEE International Ultrasonics Symposium (IUS), Washington, DC, USA,* 06. September 2017, ISSN 1948-5727
- **LENOIR et al.** STUDY OF LAMB WAVES BASED UPON THE FREQUENCY AND ANGULAR DERIVATIVES OF THE PHASE OF THE REFLECTION COEFFICIENT. *THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, Bd. 94, Nr. 1,* 01. Juli 1993, ISSN 0001-9966, 330-343